Europäisches Patentamt

European Patent Office

Office européen des brevets

(11) Publication number: **0 176 953**
**A2**

# EUROPEAN PATENT APPLICATION

(21) Application number: **85112185.5**

(22) Date of filing: **25.09.85**

(51) Int. Cl.⁴: **H04L 11/16 , H04M 11/06**

(30) Priority: **26.09.84 ES 536269**

(43) Date of publication of application:
**09.04.86 Bulletin 86/15**

(84) Designated Contracting States:
**AT BE DE FR GB IT SE**

(71) Applicant: **Standard Electrica, S.A.**
**Manuel Cortina 2nd, 3rd Floor**
**Madrid 10(ES)**

(72) Inventor: **Klatipov, Edmundo Valentin**
**Santa Virginia, 12**
**Madrid(ES)**
Inventor: **De La Torre, Carlos Hita**
**Antonio Folgueras, 9**
**Madrid(ES)**

(74) Representative: **Villinger, Bernhard, Dipl.-Ing. et al**
**Standard Elektrik Lorenz AG Patent- und**
**Lizenzwesen Postfach 300 929 Kurze Strasse 8**
**D-7000 Stuttgart 30(DE)**

(54) New simultaneous voice and date communications system, with possibility of connection to public or private networks.

(57) A new simultaneous voice and data communication system is described, with possibility of connection to public or private networks and which consists of a ring tap points to the ring for the units, and the units of the system (stations, lines, units and/or interfaces).

FIGURE 1.

EP 0 176 953 A2

"New simultaneous voice and data communications system, with possibility of connection to public or private networks"

The present patent refers to a simultaneous voice and data communications system using telephone stations and data terminal equipments, with possibility of connection to public or private networks.

Business communication systems have undergone an evolution which, starting from electromechanical systems with voice communication services, have developed to advanced systems, providing an integral solution to the communications requirements in office automation.

The first systems to be considered when analyzing the generic problem of communication in offices, are those fundamentally concerning voice switching. These systems in almost all cases have adopted one of the following configurations:

1) - PABX

This solution copies the architecture, and in many cases the equipment of public telephone exchanges and makes use of them to comply the requirements of private organization.

The PABX's have the following characteristics:

- The centralized configuration which they use is cause of high fix costs, which can only be compensated by the installation of a high number of subscribers. However they are optimum when the number of subscribers is very large.

- The installation is quite rigid as it is made by means of pairs assigned to each subscriber. Modifications of configuration require changes implying service interruptions, and, also, specialized personnel.

- They are intended for voice services. Data services are include at high costs, and with bandwidth limitations in analogic exchange Digital PABX's pretend to offer access to data services in a more easy way.

- Normally they offer a wide range of net facilities (abbreviated selection, access to closed groups, etc.) They seldom offer the possibility of connection of multifeature telephones.

- The PABX's fundamentally are connected to the switched public telephone network. Normally they do not provide access to public or private data networks.

2) - Key Systems

In those cases in which the number of telephone sets does not justify the cost of a PABX, or in those in which the functions of a telephone operator must be shared by several subscriber's positions, or lastly when desiring to simplify the accesses, both internal and external, and also a more complete signaling the normally offered solutions are within the key system category, which have the following characteristics.

- Most of them are electromechanical and their normal structure i as a multiwire bus, from which the individual terminals are connected. They are, in general, of small capacity, and within this range, they become more economical than the PABX's.

- Normally they are systems provided with blocking as the bus usually provides less number of circuits than connected terminals.

- The installation is rigid, in as much as the location of the terminals on the bus is not easily modificable, as it normally requires a physical modification of the equipment, and consequently, the out of service placement of the system.

- They do not include data services.

- Normally they only provide the facilities peculiar to these typ of systems, such as: complete signaling of all positions, transfer facilities, multi-operator, etc., but do not include extra facilities, (directory, agenda, etc.)

- Normally they are connected to the public switched telephone network or to a PABX.

Besides these systems fundamentally intended for voice switching, with an old record in the office communication systems market, recently, the local area networks have been developed.

The notion of local area network (LAN) has come into effect through several reasons, the most evident one being the suitability of providing a mechanism to allow that equipments from different manufacturers, could be interconnected to each other, by using a common communication media. In this way, mini-processors, terminals, personal computers, text processors, mass memory devices, printers, etc, can be interconnected.

At the present moment, basically, there are two protocols for local area networks defined by the 802 Commission of the IEEE. The first of them is the CSMA/CD (Carrier Sense Multiple Access/Collision Detection), a packet broadcast system based on Ethernet (industry standard proposed by Digital Equipment, Intel, and Xerox), and the second is the "Token Passing" supported by IBM. However, none of these protocols have been designed for an efficient and economic handling of voice signals. Local area networks have, in general, the following characteristics:

- Very wide connectability range, from very few, to hundreds or thousands of terminals. There are diverse architectures, topologies (ring, bus., star) and mechanisms of access (protocols). In general, they often are more costly than the equivalent voice systems.

- Usually they are systems with blocking with a statistical use of the available bandwidth, even during connection.

- They usually are very flexible systems, in their installation, and reconfiguration, particularly as compared with conventional data systems.

- They are not intended for voice handling, due to the statistical nature of information transfers.

- They provide a wide range of data services and facilities including added value functions, that increase the transportation basic service.

- The range of terminal devices connected, depends on the manufacturer, but in general, is very wide.

- They are normally connected to public data networks, or otherwise to other terminal devices of the public switched telephone networks, by means of vocal band modems.

The new simultaneous voice and data communications system, with possibility of connection to public or private networks, which is the object of the present patent, is intended to provide an integrated communications system, mainly though for offices, having the advantages of each of the above described systems, but not incurring in their disadvantages.

The characteristics and/or advantages of the new system are:

- It is a simultaneous voice and data communications system, with possibility of connection to public or private networks. The system is completely modular, and the cost depends exclusively on the number of equipped stations. It may be applied to large offices, by adding interconnected systems.

- The system is of flexible installation, being easy to be connected, and adapted to a new configuration.

- Provides simultaneous voice and data services. The interfaces and protocols required for data services, do not penalize the telephone service.

- Provides a wide range of voice facilities: Besides having all the characteristics of a key system it offers to the user a "friendly" operation that guides the same through a host of facilities (abbreviated dialing, agenda, directory, clock, etc.)

- The connection of the data terminal is simple and flexible. The protocols and formats satisfies the requirements of the present market (RS 232-C, BSC, SDLC, etc.). It the user demands it, additional facilities modules may be added.

- The hardware is universal, and its adaptation depends on the software.

- The system may be connected to the following networks:

- Public switched telephone networks both for voice and data services. In the second case, voice band modems are used.

- Private telephone networks

- Public data networks, both circuit switched and packet switched

- Local area networks.

- Integrated services digital networks (ISDN)

The scope of the invention will be better understood with the aid of the following description given with reference to the included drawings, in which:

Figure 1 shows the different elements forming the system.

Figure 2 is a block diagram of the basic nucleus common to all units of the system, and their connection to the ring, and to the specific blocks of the different units of the system.

Figure 3 shows the lines unit block diagram.

Figure 4 shows the block diagram of the telephone station.

Figure 5 shows the block diagram of the data access unit, and

Figure 6 shows a generic configuration of the system, with internal and external voice and data communications.

In the different figures, use has been made of the same symbols for identical meanings, as detailed in the following:

11 - Ring

12 - Tap point to the ring of the different units of the system

13 - Lines unit (one of the units of the system)

14 - Telephone station (another of the units of the system)

15 - Data access unit (another of the system's units)

16 - Any other future interface (future units of the system)

17 - General supply of the system

18 - Connection the mains supply

19 - External link, subscriber's loop or PBX extension line.

20 - To the data terminal interface

21 - To the data terminal interface.

22 - To the voice interface in telephone station

23 - To the multiplexing interface in the lines unit.

24 - To the parallel control interface.

25 - To the series control interface

41 - Data input by the user, by means of push button unit

42 - Visual signalizations

43 - Acoustical signalizations

44 - User interface

45 - Data interface

51 - Data terminal equipments interface

61 - Modems with automatic call equipment

62 - Packet assembly/disassembly equipment

63 - Packet switched data network (PSON)

64 - Public switched telephone network (PSTN)

65 - Analogic PABX

66 - Simultaneous voice and data communications system, object of the present patent.

CC/CC - DC/DC converter

INC - Closed numbering interface

I RDSI - ISON interface

I X-25 - X-25 interface

L1, L2 ....    |    – Telephone lines 1, 2 .......2n-1, 2n
$L_{2n-1}$, $L_{2n}$    |

MCC - Central control module

MCD - Data coding module

MCS - Synchronization and switching module

MDC - Voice coding/decoding module

MIC - Ring interface module

MID - Date interface module

MIL - Line interface module

MIU - User interface module

$MLT_{1,n}$ - 1, n telephone line module

MUX - Multiplexing module

RDSI - Integrated services digital network

Rs 232-C - RS 232-C interface

S(RDSI) - (ISON) S interface

TD - Data terminal

TD V-24 - V-24 data terminal

TD V-25 - V-25 data terminal

TD X-25 - X-25 data terminal

TN - Normal telephone set

T RDSI - ISON termination

V-25 - V-25 interface

X-25 - X-25 interface.

The new simultaneous voice and data communications system, with possibility of connection to public or private networks, is a PCM system with a ring topology, allowing connection to the ring of telephone terminals (Key systems, multifunction, etc.) and of data terminals (teleprinters, facsimile, etc.) with possibility of access to any type of computers external network.

An important characteristic that must be emphasized, is that the new system according to the inventions is the first commercial system providing simultaneously voice and data services, making use, to this end of techniques more related to digital telephony than to data systems. Besides it combines in a single product a digital telephone system and a local area network providing local area network services at low cost.

The system is of clear modular design, and with distributed control, which makes the cost to be a lineal function of the number of terminals.

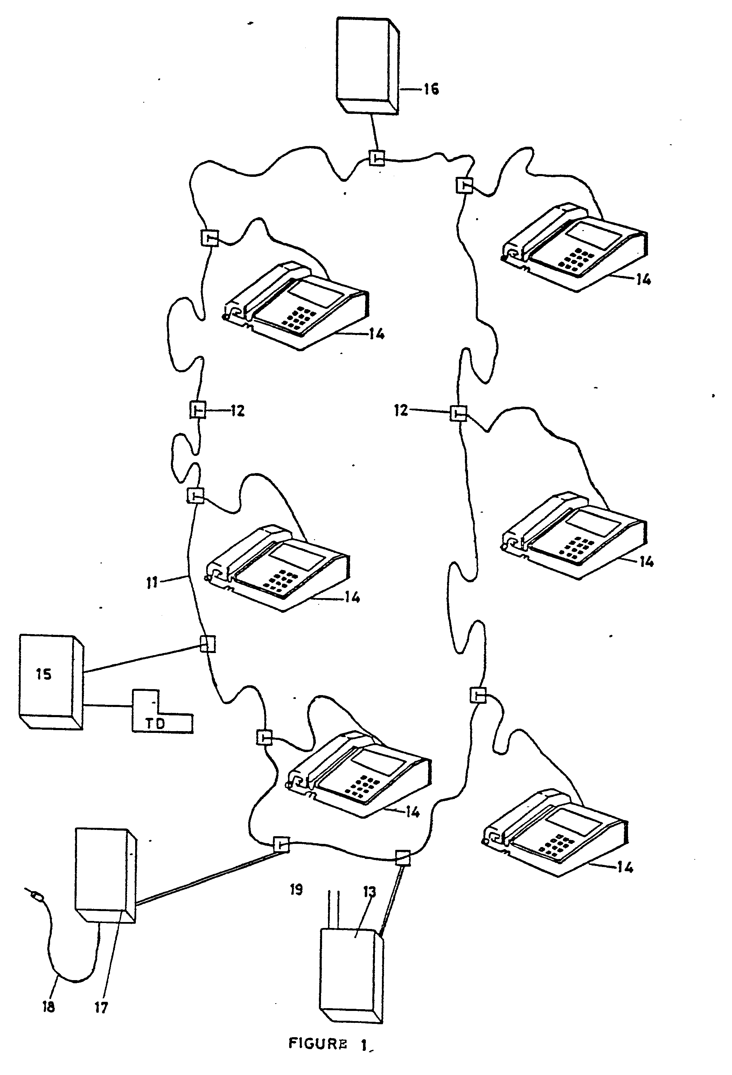

As shown in figure 1, the system consists in the following elements: the ring (11), the tap points to the ring for the different units of the system (12), and the different units of the system lines unit (13), telephone station (14), autonomous data interface (15), etc. Said figure 1 shows, besides, the general supply of the system (17) by connection to the electric mains supply (18), as well as the output (19) towards the external links, the subscriber loops, or the extension lines of a PBX.

The ring consists in a physical support for the series transmission of the information(pair of wires, coaxial cable, optical fiber, ets.) which is made by means of pulse code modulation, and optionally by a pair of additional conductors intended for the supply of the different units of the system connected to the ring, as long as no use of tele-supply or local supply, of said units is made the tap points to the ring of the different units of the system, may be installed at any point of the ring and are provided as a telephone type plug.

When a tap point has not any unit connected, it allows propagation of the information from the input to the output, with no modification of the same. However, when a unit is connected to a tap point, the unit acts on the tap point diverting the input information towards its own unit, and connecting the output of the same, to the physical support of the transmission (pair of wires, coaxial cable, optical fiber, etc.), in the out-going direction. The tap point, restores the ring continuity in case of disconnection of the unit, be it caused either by anomalous operation, failure or physical disconnection of the unit.

The different units of the system, in accordance with modular design of the same, are characterized in that all of them have a common part, which will be denoted as "Basic Nucleus", and another which is specific for each type of unit.

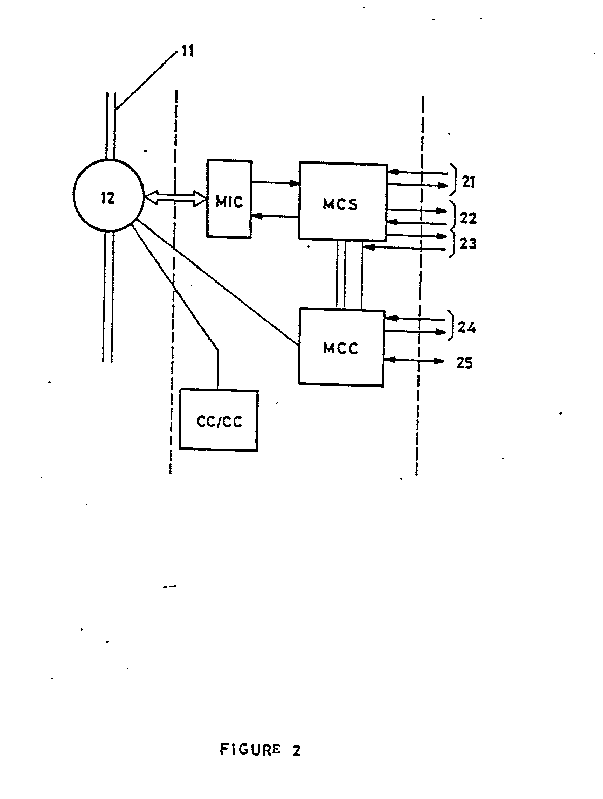

Figure 2 shows a block diagram of the Basic Nucleus, common to any unit to be connected to the ring. This Basic Nucleus, consists of a DC/DC converter (CC/CC) and three functional modules: the ring interface module (MIC), the synchonization and switching module (MCS) and the central control module (MCC).

The DC/DC converter (CC/CC) provides to the modules of the units, the voltages and currents needed for their operation, obtained from input voltage taken from the external supply.

The ring interface module (MIC) accomplishes the following functions:

- Insures correct bit transmission between active consecutive units of the ring,

- Decodes the information received in the input pair, and connection in phase its interior clock, with the clock information included in the input train bits,

- Delivers to the syncronization and switching module (MCS) the received clock and data,

- Codes the binary information from MCS module and sends it to the tap point to the ring.

The syncronization and switching module (MCS) accomplishes the following functions:

- Alignment of frames received from the ring interface module (MIC)

- Multiplexing and demultiplexing of the informations included in the time slots of the frames.

- Storing of the contents of the frames in a buffer memory
- Switching to and from the outputs/inputs of voice and data of the corresponding bytes.
- Generates and sends to the ring interface module (MIC) the output frames with the new contents of the time slots.
- Supervises the quality of transmission of the received frames
- Provides, from the central control module (MCC), an orderly acces to the information contained in the buffer memory.

The central control module (MCC) accomplishes the following functions:
- Controls the operation of the unit
- Maintains the actualized image of the state of the complete system
- Materializes the internal signaling protocol
- Insures the dialog with the user in the telephone stations of the system.
- Controls the external lines in the lines units.

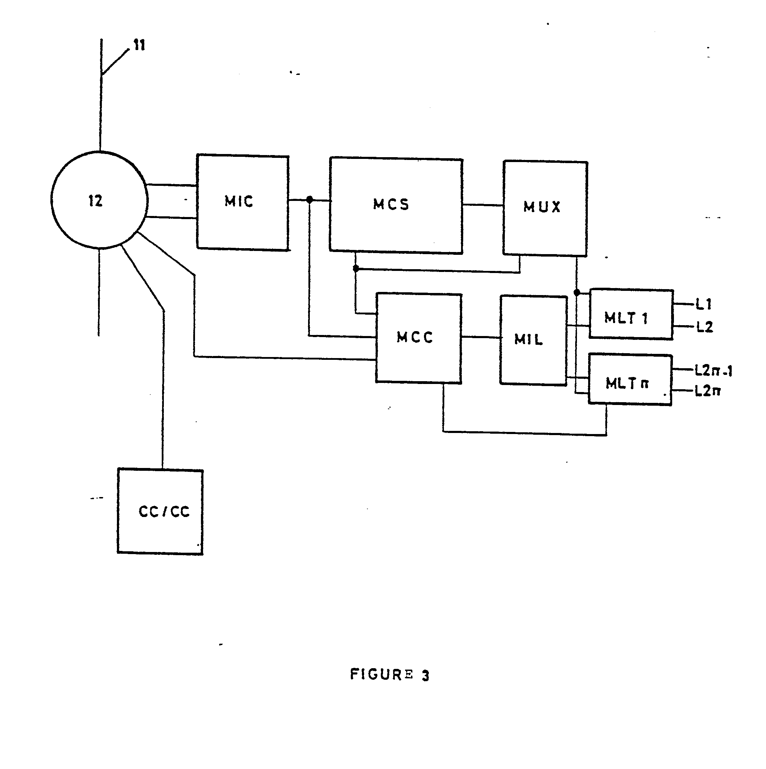

Figure 3 shows the block diagram of the lines unit, which is one of the different units of the system, that may be connected to the ring. The lines units has for its function to connect the stations of the system to external telephone lines, either directly or through the extensions of a PBX, transforming the digital information of the stations into analogic information. As may be seen from said fig. 3, the lines unit consists in the Basic Nucleus, common to all the units of the system, and in three additional modules: the line interface module (MIL), the telephone line module (MLT) and the multiplexing module (MUX).

The line interface module accomplishes the following functions:
- Interprets the in-coming call signaling from the different lines
- Generates out-going call signaling towards the different lines
- Maintains the proper timing

The telephone line module (MLT), insures the adaptation of the digital signals generated by the system, to the signals accepted by the external telephone lines, or by the external links, and conversely.

The multiplexing module (MUX) combines, or separates, the informations from, or to, the different coders/decoders included in the different MLT modules.

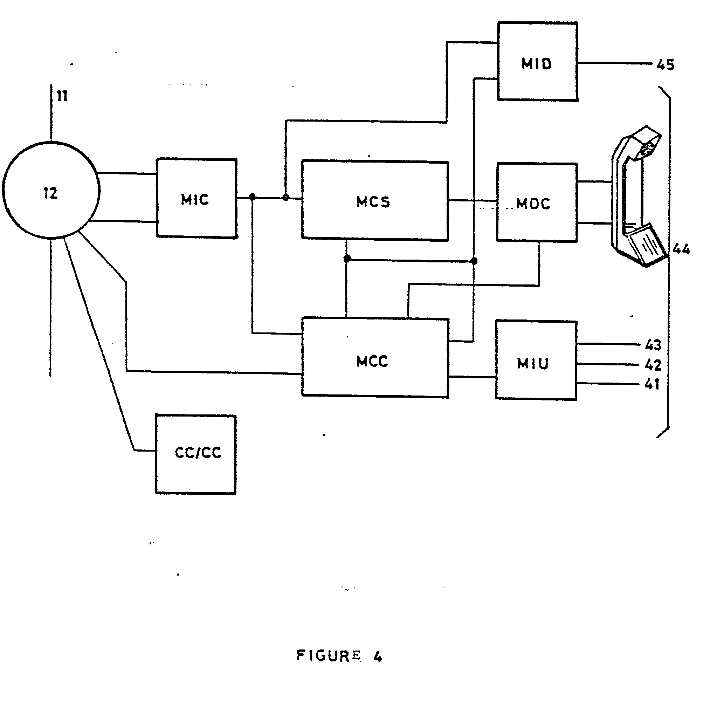

Figure 4 shows the block diagram of the telephone station, which is another of the units of the system that my be connected to the ring. The telephone stantion answers to the design of a multifunction telephone station, with all the telephone services of a telephone set, plus those provided by the alpha numeric display, such as, a general and private directory, personal agenda, calendar, clock, automatic dialing with repertoire, etc. Through the telephone station, data terminals may be connected.The telephone station consists of the Basic Nucleus, and three additional modules; the voice coding/decoding module (MDC), the user interface module (MIU), and the data interface module (MID).

The voice coding/decoding module (MDC) accomplishes the following functions:
- Takes the digital samples received in the frames through the synchronisation and switching module (MCS) of the Basic Nucleus, and converts them in an audible analogic signal, delivered to the telephone receiver
- Takes the analogic signal generated by the microphone, codes it and transfers it to the synchronisation and switching module (MCS) of the Basic Nucleus.

The user interface module (MIU) accomplishes the following functions:
- Transfers the information inserted by the user by means of push buttons, to the central control module (MCC) of the Basic Nucleus.
- Provides the divers acoustic signals
- Presents to the user the information about the state of the system, and the different helping informations by means of the suitable optical visualization system.

The data interface module (MID) transfers to, and receives from, the data coding module (MCD), the information and control signals required for the correct operation of the latter.

With the elements and units so far described, a basic telephone system would have consisting in the ring properly said, with the supply unit, a series of tap points, a lines unit, and a series of telephone stations.

However, the system also provides data services wholly equivalent to those provided by a local area network. In effect, by means of the corresponding interface, a great variety of terminals from different manufacturers may be connected to the ring, that may communicate with each other and have access to public or private external networks.

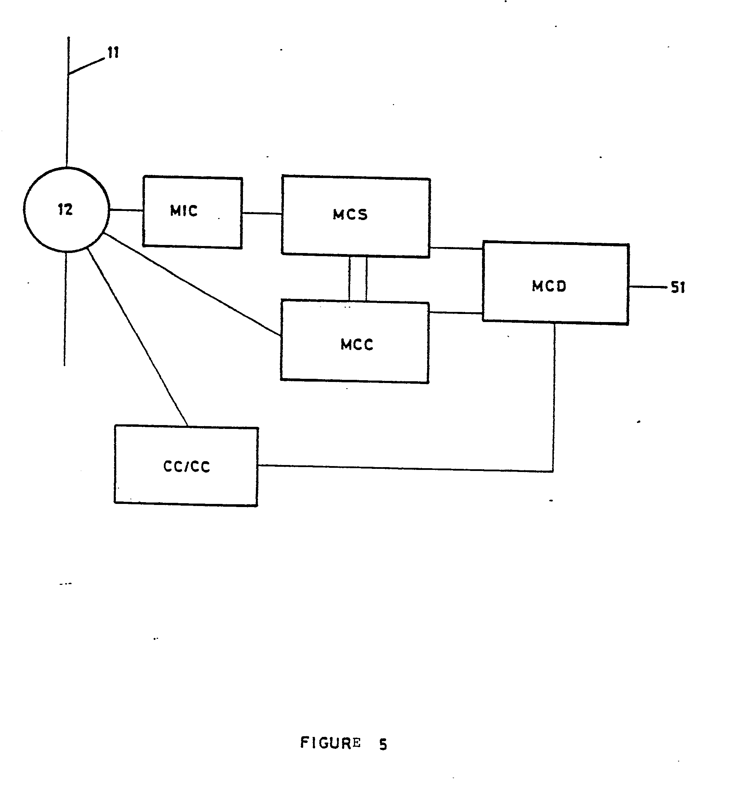

Figure 5 shows the block diagram of one of these interfaces, the data access unit, consisting in the Basic Nucleus (common to all units of the system) and by the data coding module (MCD) that accomplishes the following functions:
- Procures the connection, use, and operation of channels for data use presented by the synchronisating module (MCS) of the Basic Nucleus, through the data interface module (MID) included in the MCD.
- Accomplishes the data channels multiplexing/demultiplexing to o from the frame, and their switching from or to the terminal elements.
- Transfers the data to or from the different remote terminal elements connected to the MCD module, directly or through external networks, either private or public, adapting itself in protocol, codes, and transmission characteristics to the requirements of the system, and of the terminal elements.
- Accomplishes when necessary, the control, and the procurement of any adapting element to external networks, either private or public.
- Controls the establishing and ending protocols of all the data communications.

As a result of the modular structure of the systems and as it would be logical to think, this data coding module (MCD) may be directly connected to the data interface module (MID) of a telephone station, thus obtaining a data interface at a much lower cost, as use is made of the Basic Nucleus of the telephone station.

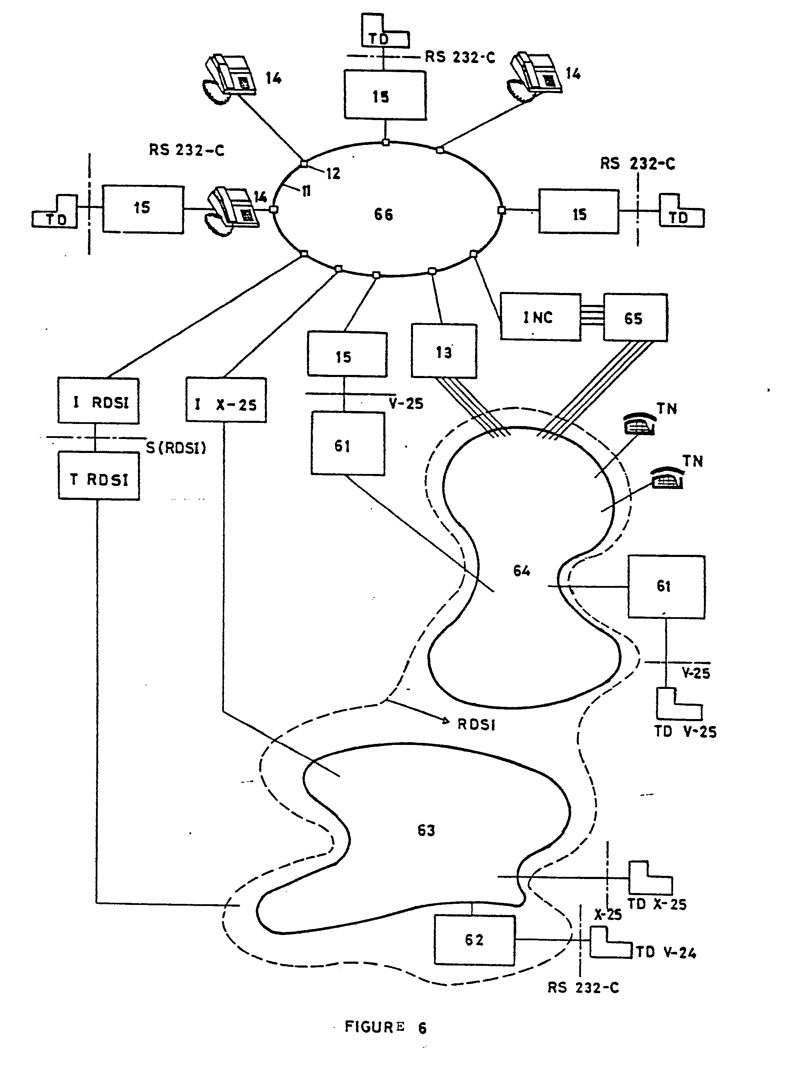

Figure 6 shows a generic configuration of the simultaneous voice and data communication system, with possibility of connection to public or private networks, in which may be seen the enormous potential of application.

In said figure, connected to the ring may be seen, besides the voice telephone services (telephone stations, lines units, closed numbering interface), data terminals, either through an autonomous data interface, or through a telephone station.

Likewise are shown data terminals connected to the ring of the system, with access to terminals or computers connected to the analogic public switched telephone network, as long as they operate through the corresponding modems. This is achieved through a data access unit, and of modems provided with automatic call equipment working in accordance with recommendation V-25 of the C.C.I.T.T.

The figure shows also the connection to a packet switching data network, through an X-25 interface.

Lastly, it is also possible, through the corresponding interfaces, the connection to other digital systems, such as other ring systems according to the one described and subject of the present patent, locations of public exchanges or of private branch exchanges, and to the integrated services digital network.

## Claims

1.-New simultaneous voice and data communications system, with possibility of connection to public or private networks characterized in that it consists of a ring tap points to the ring for the units, and the units of the system (stations, lines units, and/or interfaces).

2.-New simultaneous voice and data communications system, with possibility of connection to public or private networks, according to claim 1, characterized in that the ring consists of a physical support for the series transmission of the information, which is accomplished by means of pulse code modulation, and optionally by a pair of additional conductors intended for the supply of the different units of the system connected to the ring, in case no use is made of tele supply or local feeding in said units.

3.-New simultaneous voice and data communications system, with possibility of connection to public or private networks according to claim 1, characterized in that the tap points may be installed at any point in the ring and are presented facing the units, in form of a telephone type plug. When a tap point has not any unit connected, allows propagation of the information from the input to the output, with no modification of the same. However, when a unit is connected to a tap point, the unit acts on the same deriving the input information towards the own unit, and connecting the output of the same to the physical support of transmission in the out-going direction. The tap point restores the continuity of the ring in case of disconnection of the unit, either be it due to anomalous operation, failure, or physical disconnection of the unit.

4.-New simultaneous voice and data communications system, with possibility of connection to public or private networks, according to claim 1, characterized in that all the units(stations, lines units, and/ or interfaces), connected to the ring have a common part to all of them (Basic Nucleus) and another specific for each type of unit.

5.-New simultaneous voice and data communications system, with possibility of connection to public or private networks, according to claims 1 and 4, characterized in that the Basic Nucleus of the units consists of a DC/DC converter (CC/CC) and three operative modules: the ring interface module (MIC), the synchronisation and switching module(MCS) and the central control module (MCC).

6.-New simultaneous voice and data communications system, with possibility of connection to public or private networks, according to claims 1, 4 and 5, characterized in that the DC/DC converter (CC/CC) of the Basic Nucleus of the units, supplies to the modules of the units, the voltages and currents required for their operation, obtained from the input voltage taken from the external supply.

7.-New simultaneous voice and data communications system, with possibility of connection to public or private networks,according to claim 1, 4 and 5 characterized in that the ring interface module (MIC) of the Basic Nucleus of the units, accomplishes the following functions:

- Insures correct bit transmission between active consecutive units of the ring

- Decodes the information received in the input pair and connects in phase its interior clock, with the clock information included in the input train of bits

- Delivers to the synchronisation and switching moducle (MCS) the received clock and data

- Code the binary information from MCS module and sends it to the tap point to the ring.

8.-New simultaneous voice and data communications system, with possibility of connection to public or private networks according to claims 1, 4 and 5, characterized in that the synchronisation and switching module of the Basic Nucleus of the units, accomplishes the following functions:

- Alignment of frames received from the ring interface module (MIC)

- Multiplexing and demultiplexing of the informations included in the time slots of the frames

- Storing of the contents of the frames in a buffer memory

- Switching to and from the output/inputs of voice and data of the corresponding bytes

- Generates and sends to the ring interface module (MIC) the output frames with new contents of the time slots.

- Supervises the quality of transmission of the received frames.

- Provides, from the central control module (MCC), an orderly access to the information contained in the buffer memory.

9.-New simultaneous voice and data communications system with possibility of connection to public or private networks according to claims 1, 4 and 5 characterized in that the central control module (MCC) of the Basic Nucleus of the units accomplishes the following functions:

- Controls the operation of the unit

- Maintains the actualized image of the state of the complete system

- Materializes the internal signaling protocol

- Insures the dialog with the user in the telephone stations of the system.

- Controls the external lines in the lines units.

10.-New simultaneous voice and data communications system, with possibility of connection to public or private network according to claims 1 and 4, characterized in that each lines unit, one of the units of the system, consists of the Basic Nucleus and three additional modules: the line interface module (MIL), the telephone line module (MLT) and the multiplexing module (MUX).

11.-New simultaneous voice and data communications system, with possibility of connection to public or private networks according to claims 1, 4 and 10 characterized in that the line interface module (MIL) of the lines unit accomplishes the following functions:

- Interprets the incoming call signaling from the different lines

- Generates the out going call signaling towards the different line

- Maintains the proper timing

12.-New simultaneous voice and data communications system, with possibility of connection to public or private networks, according to claims 1, 4 and 10, characterized in that the telephone line module (MLT) of the lines unit insures the adaptation of the digital signals generated by the system, to the signal accepted by the external telephone lines, or by the external links, and conversely.

13.-New simultaneous voice and data communications system, with possibility of connection to public or private networks, according to claims 1, 4 and 10, characterized in that the multiplexing module (MUX) of the lines unit, combines or separates the informations from or to the different coders or decoders included in the different MLT modules.

14.-New simultaneous voice and data communications system, with possibility of connection to public or private networks, according to claims 1 and 4, characterized in that each telephone station, another of the units of the system, consists of the Basic Nucleus, and three additional modules: the voice coding/decoding module (MDC), the user interface module (MIU) and the data interface module (MID).

15.-New simultaneous voice and data communications system, with possibility of connection to public or private networks, according to claims 1, 4 and 14, characterized in that the voice coding/decoding module (MDC) of the telephone station accomplishes the following functions:

- Takes the digital samples received in the frames through the synchronisation and switching module (MCS) of the Basic Nucleus and converts them in an audible analogic signal that is delivered to the telephone receiver.

- Takes the analogic signal generated by the microphone codes it and transfers it to the synchronisation and switching module (MCS) of the Basic Nucleus.

16.-New simultaneous voice and data communications system, with possibility of connection to public or private networks according to claims 1, 4 and 14, characterized in that the user interface module (MIU) of the telephone station, accomplishes the following functions:

- Transfer the information inserted by the user by means of push-buttons, to the central control module (MCC) of the Basic Nucleus.

- Provides the divers acoustic signals

- Presents to the user the information about the state of the system and the different helping informations, by means of the suitable optical visualization system.

17.-New simultaneous voice and data communications system with possibility of connection to public or private networks,according to claims 1, 4 and 14, caracterized in that the data interface module (MID) of the telephone station, transfers to, and receives from, the data coding module (MCD), the information and control signals required for the correct operation of the latter.

18.-New simultaneous voice and data communications system, with possibility of connection to public or private networks, according to claims 1 and 4, characterized in that each data access unit another of the units of the system, consists of the Basic Nucleus, and the data coding module (MCD), that accomplishes the following functions:

- Procedures the connection, use and operation of the channels for data use, presented by the synchronisation and swiching module (MCS) of the Basic Nucleus, through the data interface module (MID) included in the MCD.

- Accomplishes the data channel multiplexing/demultiplexing to and from the frame and their switching from and to the terminal elements.

- Transfers the data to and from the different remote terminal elements connected to the MCD module directly or through external networks, either private or public, adapting itself in protocol codes, and transmission characteristics, to the requirements of the system and of the terminal elements.

- Accomplishes, when necessary, the control and the procurement o any adapting element to external networks, either private or public.

- Controls the establishing and ending protocols of all data communications.

19.-New simultaneous voice and data communications system, with possibility of connection to public or private networks, according to claims 1, 4, 14, 17 and 18 characterized in that the data coding module (MCD) may be directly connected to the data interface module (MID) of a telephone station.

20.-New simultaneous voice and data communications system, with possibility of connection to public or private networks.

FIGURE 1

FIGURE 2

FIGURE 3

0 176 953

FIGURE 4

FIGURE 5

FIGURE 6